**Europäisches Patentamt**

**European Patent Office**

**Office européen des brevets**

(11) Veröffentlichungsnummer : **0 033 938**
**B1**

(12) **EUROPÄISCHE PATENTSCHRIFT**

(45) Veröffentlichungstag der Patentschrift :
**14.09.83**

(21) Anmeldenummer : **81100745.9**

(22) Anmeldetag : **28.01.81**

(51) Int. Cl.³ : **B 65 D 81/32, B 65 D 83/00**

(54) **Mehrfachtube.**

(30) Priorität : **11.02.80 DE 3005008**

(43) Veröffentlichungstag der Anmeldung :
**19.08.81 Patentblatt 81/33**

(45) Bekanntmachung des Hinweises auf die Patenterteilung : **14.09.83 Patentblatt 83/37**

(84) Benannte Vertragsstaaten :
**CH DE FR GB LI**

(56) Entgegenhaltungen :
**US A 3 952 920**

(73) Patentinhaber : **Espe Fabrik pharmazeutischer Präparate GmbH
D-8031 Seefeld / Obb (DE)**

(72) Erfinder : **Herold, Wolf-Dietrich, Dr. Ing.
Seestrasse 16
D-8031 Hechendorf (DE)**

(74) Vertreter : **Strehl, Peter et al
Strehl, Schübel-Hopf, Schulz Patentanwälte Widenmayerstrasse 17 Postfach 22 03 45
D-8000 München 22 (DE)**

Jouve, 18, rue St-Denis, 75001 Paris, France

## Mehrfachtube

Die Erfindung betrifft eine Mehrfachtube der im Oberbegriff des Anspruchs 1 angegebenen Gattung, wie sie aus der USA-Patentschrift Nr. 3952 920 bekannt ist. Derartige Tuben dienen zum gleichzeitigen Ausbringen zweier oder mehrerer Komponenten, die unter Bildung einer gebrauchsfertigen viskosen Masse, beispielsweise eines Zahnzementes oder eines Klebstoffs, miteinander reagieren, wobei es darauf ankommt, daß die jeweils ausgebrachten Mengen der Komponenten in einem festen Verhältnis zu einander stehen.

Bei der bekannten Mehrfachtube besteht ein gravierender Nachteil darin, daß die Gewindespindel mit der Stempelanordnung nach vollständiger Entleerung der Kammern nur durch zeitraubendes vollständiges Zurückschrauben der Gewindespindel entnommen werden kann. Ein solche Entnahme ist dann erforderlich wenn die Gewindespindel und gegebenenfalls auch die Stempelanordnung wieder verwendet werden sollen, während der Tubenkörper in aller Regel als Wegerfteil ausgebildet ist.

Aus der deutschen Patentschrift Nr. 1 411 642 und der deutschen Gebrauchsmusterschrift Nr. 6 937 543 sind ferner Doppeltuben bekannt, bei denen die Stempelanordnung lediglich von hinten in den Tubenkörper eingeschoben wird und zur Wiederverwendung der Stempelanordnung — obwohl daran nicht gedacht ist — diese lediglich nach hinten herauszuziehen wäre. Diese bekannten Doppeltuben arbeiten jedoch ohne Gewindespindel, so daß zum Ausbringen der Komponenten eine Druckkraft von Hand auf die Stempelanordnung aufgebracht werden muß. Je nach der Viskosität der Komponenten kann dies in einer schwierigen Handhabung resultieren. Insbesondere ist es mit derartigen Doppeltuben aber praktisch unmöglich, genau dosierte Mengen auszubringen.

Der Erfindung liegt die Aufgabe zugrunde, eine Mehrfachtube zu schaffen, die bei einfachem Aufbau und entsprechend wenig aufwendiger Herstellung eine genaue Dosierung der auszubringenden Komponentenmengen vermittelt und gleichzeitig eine einfache und rasche Montage und Zerlegung zur Wiederverwendung einzelner Teile gestattet.

Die erfindungsgemäße Lösung dieser Aufgabe ist im Kennzeichnungsteil des Schutzanspruchs 1 angegeben. Danach läßt sich die Gewindespindel unabhängig davon, wie weit die Stempelanordnung bereits in den Tubenkörper vorgeschoben worden ist, aus der Stempelanordnung und dem Tubenkörper in seitlicher Richtung durch einen einzigen einfachen Handgriff herausnehmen, woraufhin die Stempelanordnung frei nach hinten herausgezogen werden kann. Das Auswechseln von Gewindespindel und Stempelanordnung gestaltet sich durch die erfindungsgemäßen Maßnahmen so einfach, daß vom Hersteller jeweils nur gefüllte Tubenkörper geliefert zu werden brauchen, während der Anwender eine einzige Gewindespindel und eine einzige Stempelanordnung benötigt, mit denen er in Verbindung mit den Tubenkörpern einfach und genau arbeiten kann.

Aus den USA-Patentschriften Nr. 2,745,575 und Nr. 3,353,718 sind zwar Ausbringvorrichtungen bekannt, bei denen die Gewindespindel durch Betätigen eines Schiebers aus ihrem Eingriff mit dem Gegengewinde gelöst und danach aus dem Zylinder herausgezogen werden kann. Aus der französischen Patentschrift Nr. 585 633 ist es ferner bekannt, das Gegengewinde für die Gewindespindel in einem teilbaren Deckel vorzusehen, so daß nach Öffnen des Deckels die Gewindespindel seitlich bewegt und entnommen werden kann. Die Verhältnisse bei derartigen Einkammer-Vorrichtungen lassen sich jedoch nicht mit den Verhältnissen bei Mehrfachtuben vergleichen, bei denen die notwendigerweise vorgesehene Stempelanordnung zum gleichzeitigen Vortreiben aller Kolben den Gesamtaufbau zwangsläufig kompliziert. Insbesondere bieten diese Veröffentlichungen keine Anhaltspunkte für das gleichzeitige Entnehmen der Gewindespindel aus dem Tubenkörper und aus der Stempelanordnung, was nicht nur die Handhabung der Vorrichtung vereinfacht sondern auch dann von Bedeutung ist, wenn etwa nur die Gewindespindel wiederverwendbar sein soll.

Die Weiterbildung der Erfindung nach dem Schutzanspruch 2 bietet den zusätzlichen Vorteil, daß zur Herstellung des Tubenkörpers ein Konstruktiv einfaches Spritzwerkzeug ausreicht und daß Spindeln mit unterschiedlichen Steigungen eingesetzt werden können.

Die Weiterbildungen der Erfindung nach den Schutzansprüchen 3 und 4 ergeben eine sichere Halterung der Gewindespindel in den in der Stempelanordnung bzw. dem Tubenkörper vorgesehenen Bohrungen.

Mit der vorteilhaften Weiterbildung der Erfindung nach dem Schutzanspruch 5 wird zur noch genaueren Dosierung der Abgabemengen eine hörbare, fühlbare und auch sichtbare Anzeige für die einzelnen Umdrehungen der Spindel vermittelt.

Die Weiterbildungen der Erfindung nach den Ansprüchen 6 und 7 verhindern einerseits eine falsche Betätigung der Gewindespindel, die anschließend zu einer Fehldosierung führen könnte, und vereinfachen weiterhin die seitliche Entnahme der Gewindespindel.

Ausführungsbeispiele der Erfindung werden nachstehend anhand der Zeichnung näher erläutert. In der Zeichnung zeigen

Figur 1  eine Doppeltube im Axialschnitt ;

Figur 2  eine Stirnansicht der Stempelanordnung in Richtung des Pfeiles II in Figur 1 bei entnommener Gewindespindel ; und

Figur 3  eine Stirnansicht des Tubenkörpers in Richtung des Pfeiles III in Figur 1 bei herausgezogener Stempelanordnung und entnommener Gewindespindel.

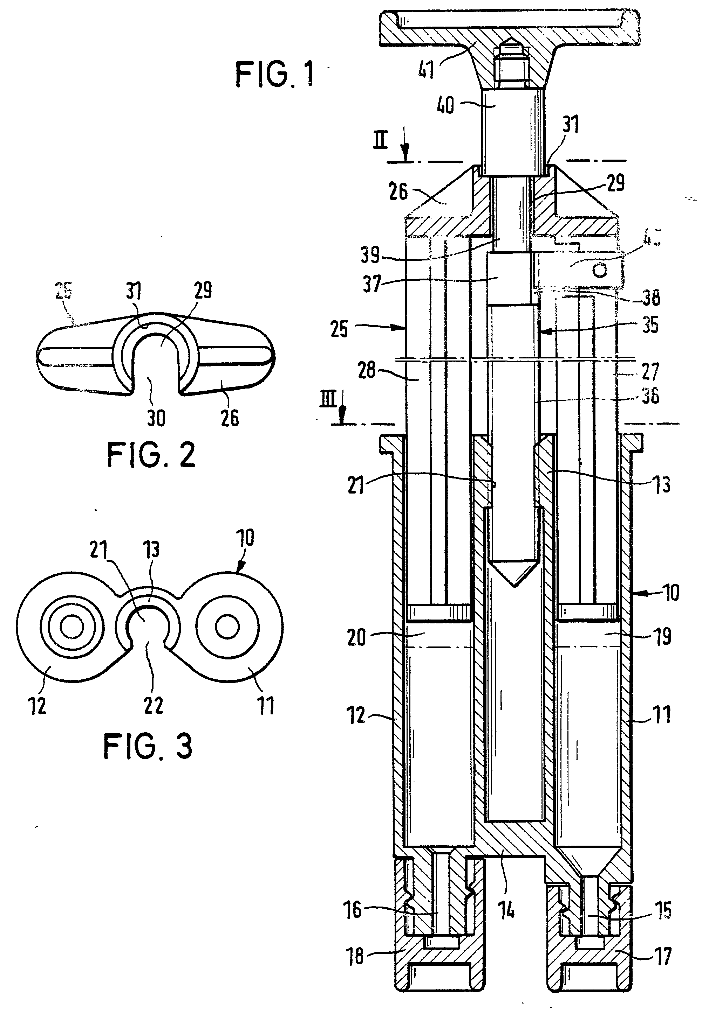

Bei dem in der Zeichnung dargestellten Ausführungsbeispiel einer Doppeltube umfaßt der Tubenkörper 10 zwei getrennte, parallel verlaufende Zylinder 11 und 12, die über zwei Stege 13 und 14 miteinander verbunden sind. An ihren vorderen Enden sind die Zylinder 11 und 12 mit unterschiedlich gestalteten Ausbringöffnungen 15 bzw. 16 versehen, die durch Kappen 17 bzw. 18 verschließbar sind. Innerhalb der Zylinder 11 und 12 ist jeweils ein Kolben 19 bzw. 20 verschiebbar angeordnet, der in Fig. 1 nur schematisch durch eine strichpunktierte Linie angedeutet ist.

In den Raum zwischen der Ausbringöffnung und dem Kolben jedes Zylinders ist eine Komponente der herzustellenden Masse eingefüllt. Die Befüllung des Tubenkörpers erfolgt durch den Hersteller derart, daß die Kolben 19 und 20 auf gleichen Höhen in ihren Zylindern stehen.

Wie insbesondere aus Figur 3 ersichtlich, weist der hintere Steg 13 des Tubenkörpers eine Bohrung 21 auf, die in seitlicher Richtung (in Figur 1 zum Betrachter hin) durch einen Schlitz 22 geöffnet ist. Die Breite des Schlitzes 22 ist etwas geringer als der Durchmesser der Bohrung 21. Im unbenutzten Zustand ist die Wandung der Bohrung 21 glatt.

Die Doppeltube umfaßt ferner eine Stempelanordnung 25, die zwei parallele, an einem gemeinsamen Stempelkopf 26 angeordnete Stempel 27 und 28 aufweist. Im gebrauchsfertig montierten Zustand ragen die Stempel 27 und 28 in die Zylinder 11 bzw. 12 hinein und liegen mit ihren vorderen, Zylindrischen Enden an den hinteren Flächen der Kolben 19 bzw. 20 an.

Wie insbesondere aus Figur 2 ersichtlich, weist der Stempelkopf 26 eine Bohrung 29 auf, die mit einem seitlichen Schlitz 30 nach außen (in Figur 1 zum Betrachter hin) geöffnet ist. Die Breite des Schlitzes 30 ist gleich dem Durchmesser der Bohrung 29. An ihrem hinteren Ende (in Figur 1 nach oben) setzt an die Bohrung 29 eine Erweiterung 31 an.

Zum Einschieben der Stempel 27 und 28 in die Zylinder 11 bzw. 12 dient eine Gewindespindel 35, die von ihrem vorderen zu ihrem hinteren Ende folgende Abschnitte aufweist:

einen Gewindeabschnitt 36 zum Eingriff in die Bohrung 21 im Steg 13 des Tubenkörpers 10;

einen Rastabschnitt 37 mit einer in Axialrichtung verlaufenden Nut 38 oder einem in Axialrichtung verlaufenden Vorsprung;

einen zylindrischen Teil 39 zum Eingriff in die Bohrung 29 im Stempelkopf 26;

einen Flansch 40 zum Eingriff in die Erweiterung 31; und

einen länglichen Griff 41.

Der Steg 13 ist elastisch, und das Gewinde der Gewindespindel 35 sowie die Bohrung 21 in dem Steg 13 sind so beschaffen und dimensioniert, daß sich beim Drehen der Gewindespindel das Gegengewinde in die Wandung der Bohrung 21 selbst einschneidet.

An dem Stempel 27 ist eine Blattfeder 45 befestigt, deren freies Ende eine kurze, in Figur 1 vom Betrachter wegweisende Abkröpfung besitzt. Diese Kröpfung wirkt mit der Nut 38 (bzw. dem statt dessen möglichen Vorsprung) derart zusammen, daß sich bei jeder Umdrehung der Gewindespindel 35 eine hörbare und fühlbare Rastung ergibt. Außerdem kann die Nut 38 (bzw. der Vorsprung) als sichtbare Anzeige der Spindelstellung dienen. Durch diese Maßnahmen wird eine sehr genaue Dosierung des Stempelvorschubs und damit der ausgebrachten Mengen der Komponenten erreicht.

Der Durchmesser des zylindrischen Teils 39 der Gewindespindel 35 ist etwas geringer als der Durchmesser der Bohrung 29 im Stempelkopf 26 und als die Breite des Schlitzes 30. Der Durchmesser des Flansches 40 ist etwas geringer als der Durchmesser der Erweiterung 31, jedoch größer als die Breite des Schlitzes 30. Dadurch wird erreicht, daß sich die Gewindespindel im Stempelkopf leicht dreht und auch, sofern der Flansch 40 aus dem hinteren Ende des Stempelkopfes herausgehoben ist, leicht durch den seitlichen Schlitz 30 entnehmen läßt. Um den Flansch 40 aus der Erweiterung 31 herauszuheben, muß die Gewindespindel entgegen der Vorschubrichtung der Stempel um eine Teildrehung zurückgeschraubt werden. Bei dieser Rückwärtsdrehung wird die Blattfeder 45, die auf derjenigen Seite der Stempelanordnung 25 angebracht, auf der sich der Schlitz 30 im Stempelkopf 26 befindet, und derart gestaltet ist, daß sie die Gewindespindel 35 gegen ein Herausdrehen sperrt, durch die Nut 38 (bzw. den Vorsprung) in Sperrichtung vorgespannt. Dabei wird sie die Gewindespindel 35 in seitlicher Richtung durch den Schlitz 30 aus dem Stempelkopf 26 herausheben.

Der Steg 13 im Tubenkörper 10 ist elastisch, so daß der Gewindeabschnitt 36 der Gewindespindel 35 unter Überwindung der elastischen Vorspannung durch den dort vorgesehenen Schlitz 22 seitlich herausgenommen werden kann.

Im Gebrauch wird der befüllte Tubenkörper vom Hersteller geliefert, und der Anwender hat nur die Stempelanordnung 25 mit eingesetzter Gewindespindel 35 von hinten her einzuführen, wobei durch Drehen (beispielsweise im Uhrzeigersinn) der Gewindespindel in den Steg 13 im Tubenkörper das Gegengewinde eingeschnitten wird. Alternativ, insbesondere bei automatisierter Montage, kann die Gewindespindel 35 als letztes Teil eingesetzt und dabei in Querrichtung durch die Schlitze 22 bzw. 30 eingeführt werden.

Zur Benutzung werden die beiden Kappen 17 und 18 entfernt, und die Gewindespindel 35 wird mittels des Griffes 41 um eine oder mehrere Umdrehungen gedreht, so daß aus den beiden Ausbringöffnungen 15 und 16 die Komponenten im vorgegebenen Mengenverhältnis austreten. Durch entsprechende Wahl der Zylinderquerschnitte läßt sich dieses Verhältnis für den jeweiligen Zweck festlegen.

Nach entleertem Tubenkörper kann in der oben beschriebenen Weise die Gewindespindel mit einem Handgriff quer zu ihrer Achse durch die Schlitze 22 und 30 entnommen werden, woraufhin sich die Stempelanordnung 25 in Axialrichtung nach hinten herausziehen läßt. Stempelanordnung und Gewindespindel können dann in dem nächsten, gefüllten Tubenkörper neu eingesetzt werden, während der entleerte Tubenkörper weggeworfen wird. Für eine derartige Wiederverwendung bestehen Stempelanordnung und Gewindespindel aus entsprechend haltbarem Material, vorzugsweise Metall.

In alternativer Ausführung besteht die Stempelanordnung 25 aus Kunststoff. In diesem Fall ist es günstig, die Blattfeder 45 aus dem gleichen Material herzustellen und unmittelbar an den Stempel 27 anzuformen. Ferner kann in diesem Fall der Schlitz 30 im Stempelkopf 26 (Figur 2) ähnlich wie der Schlitz 22 im Steg 13 des Tubenkörpers 10 gemäß der Darstellung in Figur 3 gegenüber dem Durchmesser des glatten zylindrischen Teils 39 der Gewindespindel 35 etwas verengt sein, so daß sich die Gewindespindel unter elastischer Erweiterung des Schlitzes 30 in die Bohrung im Stempelkopf einschnappen läßt. Dadurch ergibt sich eine zusätzliche Halterung der Spindel in der Stempelanordnung.

Besteht auch die Gewindespindel 35 aus Kunststoff, so wird der Handgriff 41 entgegen der Darstellung in Figur 1 mit angeformt. Wegen der größeren Toleranzen beim Spritzen der Gewindespindel aus Kunststoff werden ferner die Durchmesser der Spindel und der Bohrung 21 im Steg 13 des Tubenkörpers 10 so gewählt, daß ein selbst-schneidendes Eingreifen der Gewindespindel in diese Bohrung auch bei einem Feingewinde sicher gewährleistet ist. Trotz dieser Dimensionierung ist die Gewindespindel mit genügender Leichtigkeit drehbar, da wegen des Schlitzes 22 und der Elastizität des Tubenkörper-Materials zu große Pressungen nicht auftreten können.

Bestehen somit, wie in dieser Variante dargelegt, sämtliche Teile der Mehrfachtube aus Kunststoff, so kann die gesamte Tube als Wegwerfteil verwendet werden. In diesem Fall liegt der Vorteil des hier beschriebenen Aufbaus in der leichten Montage durch den Hersteller. Insbesondere bei automatischer Fertigung ist das seitliche Einsetzen der Spindel leichter zu bewerkstelligen als ein Einschraubvorgang, bei dem vor allem das Erkennen derjenigen Stellung, in der die Stempel 27, 28 an den Kolben 19, 20 anstoßen und die Schraubbewegung beendet werden muß, nicht unproblematisch ist.

## Ansprüche

1. Mehrfachtube mit

a) einem Tubenkörper (10), der mindestens zwei parallel verlaufende, getrennte, aber durch einen Verbindungssteg (13) äußerlich miteinander verbundene Zylinder (11, 12) enthält, deren jeder an seinem vorderen Ende mit einer Ausbringöffnung (15, 16) versehen ist,

b) einer Stempelanordnung (25) mit einer der Anzahl der Zylinder (11, 12) gleichen Anzahl von Stempeln (27, 28), die mit einem gemeinsamen Stempelkopf (26) verbunden sind und an ihren vorderen Enden jeweils mit einem Kolben (19, 20) in die Zylinder (11, 12) eingreifen, und

c) einer eine Bohrung (29) im Stempelkopf (26) durchsetzenden und in eine Bohrung (21) in dem Verbindungssteg (13) eingreifenden Gewindespindel (35) zum gleichzeitigen Verschieben der Kolben (19, 20) in den Zylindern (11, 12), dadurch gekennzeichnet, daß die beiden Bohrungen (21, 29) im Verbindungssteg (13) und im Stempelkopf (26) mit in Axialrichtung der Gewindespindel (35) verlaufenden Schlitzen (22, 30) zur seitlichen Einfügung und Entnahme der Gewindespindel (35) versehen sind.

2. Mehrfachtube nach Anspruch 1, dadurch gekennzeichnet, daß die Bohrung (21) im Verbindungssteg (13) glatt ist und die Gewindespindel (35) selbstschneidend in diese Bohrung (21) eingreift.

3. Mehrfachtube nach Anspruch 1 oder 2, dadurch gekennzeichnet, daß die Bohrung (29) im Stempelkopf (26) an ihrem vom Verbindungssteg (13) abgewandten Ende eine Erweiterung (31) aufweist, in die die Gewindespindel (35) mit einem Flansch (40) eingreift, und daß die Breite des Schlitzes (30) im Stempelkopf (26) geringer ist als der Durchmesser des Flansches (40).

4. Mehrfachtube nach einem der Ansprüche 1 bis 3, dadurch gekennzeichnet, daß der Verbindungssteg (13) des Tubenkörpers (10) aus flexiblem Material besteht und die Breite des Schlitzes (22) im Verbindungssteg (13) geringer ist als der Außendurchmesser der Gewindespindel (35).

5. Mehrfachtube nach einem der Ansprüche 1 bis 4, dadurch gekennzeichnet, daß die Gewindespindel (35) eine Nut (38) bzw. einen Vorsprung für den rastenden Eingriff des Endes einer an der Stempelanordnung (25) vorgesehen Feder (45) aufweist.

6. Mehrfachtube nach Anspruch 5, dadurch gekennzeichnet, daß die Feder (45) die Spindel (35) gegen Herausdrehen aus dem Verbindungssteg (13) sperrt.

7. Mehrfachtube nach Anspruch 6, dadurch gekennzeichnet, daß die Feder (45) auf derjenigen Seite der Stempelanordnung (25) angebracht ist, auf der die Bohrung (29) im Stempelkopf (26) den Schlitz (30) aufweist.

8. Mehrfachtube nach einem der Ansprüche 1 bis 7, dadurch gekennzeichnet, daß die Stempelanordnung (25) aus flexiblem Material besthet und der Schlitz (30) im Stempelkopf (26) enger ist als der Durchmesser der Spindel (35).

## Claims

1. A multiple tube comprising

a) a tube body (10) containing at least two parallel extending cylinders (11, 12) which are separated but externally interconnected by a connecting web (13), the front end of each cylinder being provided with a dispensing opening (15, 16),

b) a plunger arrangement (25) including a number of plungers (27, 28) identical to the number of cylinders (11, 12), the plungers being connected to one common plunger head (26) and having their front ends engaging in the cylinders (11, 12) each by a piston (19, 20), and

c) a threaded spindle (35) penetrating through a bore (29) in the plunger head (26) and engaging a bore (21) in the connecting web (13) for simultaneously displacing the pistons (19, 20) in the cylinders (11, 12), characterized in that the two bores (21, 29) provided in the connecting web (13) and plunger head (26) are formed with slots (22, 30) extending in the axial direction of the threaded spindle (35) for laterally inserting and removing the threaded spindle (35).

2. A multiple tube according to claim 1, characterized in that the bore (21) in the connecting web (13) is smooth, and that the threaded spindle (35) engages this bore (21) in a self-tapping manner.

3. A multiple tube according to claim 1 or 2, characterized in that the bore (29) in the plunger head (26) has its end remote from the connecting web (13) provided with an enlargement (31) into which the threaded spindle (35) engages by means of a flange (40), and that the width of the slot (30) provided in the plunger head (26) is smaller than the diameter of the flange (40).

4. A multiple tube according to any one of claims 1 to 3, characterized in that the connecting web (13) of the tube body (10) consists of flexible material, and that the width of the slot (22) in the connecting web (13) is smaller than the outer diameter of the threaded spindle (35).

5. A multiple tube according to any one of claims 1 to 4, characterized in that the threaded spindle (35) has a groove (38) or a projection for snap-engagement with the end of a spring (45) provided on the plunger arrangement (25).

6. A multiple tube according to claim 5, characterized in that the spring (45) locks the spindle (35) against removal from the connecting web (13) by rotation.

7. A multiple tube according to claim 6, characterized in that the spring (45) is mounted on that side of the plunger arrangement (25) on which the bore (29) in the plunger head (26) is provided with the slot (30).

8. A multiple tube according to any one of claims 1 to 7, characterized in that the plunger arrangement (25) consists of flexible material, and that the slot (30) in the plunger head (26) is narrower than the diameter of the spindle (35).

**Revendications**

1. Tube multiple comprenant :
a) un corps à tubes (10), contenant au moins deux cylindres (11, 12) disposés parallèlement, séparés mais reliés l'un à l'autre par l'extérieur au moyen d'une barrette de liaison (13), les cylindres comprenant chacun à leur extrémité avant une ouverture de sortie (15, 16),

b) un dispositif à poussoirs (25) comprenant le même nombre de poussoirs (27, 28) que le nombre de cylindres (11, 12), qui sont reliés par une tête commune (26) et qui pénètrent respectivement par leur extrémité avant au moyen d'un piston (19, 20) dans les cylindres (11, 12), et

c) une broche filetée (35) traversant un alésage (29) de la tête (26) des poussoirs et pénétrant dans un alésage (21) prévu dans la barrette de liaison (13) et destinée à déplacer simultanément les pistons (19, 20) dans les cylindres (11, 12), caractérisé par le fait que les deux alésages (21, 29) prévus dans la barrette de liaison (13) et dans la tête (26) des poussoirs sont munis de fentes (22, 30) disposées en direction axiale par rapport à la broche filetée (35) et destinées à l'introduction et au retrait par le côté de la broche filetée (35).

2. Tube multiple selon la revendication 1, caractérisé par le fait que l'alésage (21) prévu dans la barrette de liaison (13) est lisse et que la broche filetée (35) pénètre dans cet alésage (21) en y pratiquant un auto-taraudage.

3. Tube multiple selon la revendication 1 ou 2, caractérisé par le fait que l'alésage (29) pratiqué dans la tête (26) des poussoirs comprend à son extrémité qui est opposée à la barrette de liaison (13) une zone élargie (31) dans laquelle passe la tige filetée (35) par un collet (40), et que la largeur de la fente (30) pratiquée dans la tête (26) des poussoirs est plus faible que le diamètre du collet (40).

4. Tube multiple selon l'une des revendications 1 à 3, caractérisé par le fait que la barrette de liaison (13) du corps à tubes (10), est constituée en un matériau flexible et que la largeur de la fente (22) pratiquée dans la barrette de liaison (13) est plus faible que le diamètre externe de la broche filetée (35).

5. Tube multiple selon l'une des revendications 1 à 4, caractérisé par le fait que la broche filetée (35) comprend une rainure (38) ou une saillie destinée à l'encliquetage de l'extrémité d'un ressort (45) prévu sur le dispositif à poussoirs (25).

6. Tube multiple selon la revendication 5, caractérisé par le fait que le ressort (45) bloque la broche (35) et l'empêche de tourner et de sortir de la barrette de liaison (13).

7. Tube multiple selon la revendication 6, caractérisé par le fait que le ressort (45) est monté sur le côté du dispositif à poussoirs (25) où l'alésage (29) constitué dans la tête (26) des poussoirs comprend la fente (30).

8. Tube multiple selon l'une des revendications 1 à 7, caractérisé par le fait que le dispositif à poussoirs (25) est constitué en un matériau flexible et que la fente (30) pratiquée dans la tête (26) des poussoirs est plus étroite que le diamètre de la broche (35).

FIG.1

FIG. 2

FIG. 3